# EUROPÄISCHE PATENTANMELDUNG

(11) **EP 3 613 621 A1**
(43) Veröffentlichungstag der Anmeldung: **26.02.2020**
(21) Anmeldenummer: 19186515.3
(22) Anmeldetag: 16.07.2019
(51) Int. Cl.: B60K 6/48, B60K 6/36, B60K 6/365, B60K 6/387, B60K 6/547, F16H 3/089

(54) **GETRIEBEANORDNUNG FÜR EINEN HYBRIDANTRIEBSSTRANG UND VERFAHREN ZU DESSEN BETREIBEN**

(30) Priorität: 20.08.2018 DE 102018211759
(71) Anmelder: Magna PT B.V. & Co. KG, 74199 Untergruppenbach (DE); Getrag Ford Transmissions GmbH, 50735 Köln (DE)
(72) Erfinder: BALDUF, Frank, 74348 Lauffen am Neckar (DE); GERGES, Wassem, 74074 Heilbronn (DE); SCHMITZ, Harald, 44225 Dortmund (DE); SEUFERT, Martin, 71711 Steinheim (DE); SPECHT, Christian, 65439 Flörsheim am Main (DE); BRESK, Marcel, 70435 Stuttgart (DE); GÜLTLINGER, Johannes, 70374 Stuttgart (DE); GULLASCH, Jens, 74360 Ilsfeld (DE); HEGERATH, Andreas, 50126 Bergheim (DE)
(74) Vertreter: Rausch, Gabriele

(57) **Zusammenfassung**

Getriebeanordnung (18) für einen Hybridantriebsstrang (10), mit: einer Getriebeeingangswelle (26), die mit einer ersten Antriebsmaschine (12) verbindbar ist, wenigstens einer Getriebeausgangswelle (34), wenigstens einem mittels einer Gangschaltkupplung schaltbaren Gangradsatz (40, 46), der die Getriebeeingangswelle (26) und die Getriebeausgangswelle (34) verbindet, um eine Gangstufe (1, 3) einzurichten, einem Überlagerungsradsatz (64), der ein erstes Eingangsglied (66), ein zweites Eingangsglied (82) und ein Ausgangsglied (84) aufweist, und einem Maschinenglied (68), das mit einer zweiten Antriebsmaschine (16) verbindbar ist, wobei das Maschinenglied (68) mit einem Glied (66) des Überlagerungsradsatz (64) verbunden ist, wobei die GEW (26) über eine schaltbare Brückenkupplung (BR) mit einem weiteren Glied des Überlagerungsradsatzes (64) verbunden ist, wobei zwei Glieder (82, 84) des Überlagerungsradsatzes (64) mittels einer Blockierkupplung (BL) miteinander verbindbar sind. Dabei sind die Brückenkupplung (BR) und die Blockierkupplung (BL) in eine Koppel-Schaltkupplungsanordnung (K4; K4a; K4b) integriert.

## Beschreibung

Die vorliegende Erfindung betrifft eine Getriebeanordnung für einen Hybridantriebsstrang, mit einer Getriebeeingangswelle, die mit einer ersten Antriebsmaschine verbindbar ist, mit wenigstens einer Getriebeausgangswelle, mit wenigstens einem mittels einer Gangschaltkupplung schaltbaren Gangradsatz, der die Getriebeeingangswelle und die Getriebeausgangswelle verbindet, um eine Gangstufe einzurichten, mit einem Überlagerungsradsatz, der ein erstes Eingangsglied, ein zweites Eingangsglied und ein Ausgangsglied aufweist, und mit einem Maschinenglied, das mit einer zweiten Antriebsmaschine verbindbar ist, wobei das Maschinenglied mit einem Glied des Überlagerungsradsatzes verbunden ist, wobei die Getriebeeingangswelle über eine schaltbare Brückenkupplung mit einem weiteren Glied des Überlagerungsradsatzes verbunden ist, und wobei zwei Glieder des Überlagerungsradsatzes mittels einer Blockierkupplung miteinander verbindbar sind.

Ferner betrifft die vorliegende Erfindung ein Verfahren zum Betreiben eines Hybridantriebsstranges, der eine solche Getriebeanordnung aufweist, um ein mit dem Hybridantriebsstrang ausgestattetes Fahrzeug aus dem Stillstand anzufahren.

Hybridantriebsstränge für Kraftfahrzeuge sind in den letzten Jahren populär geworden. Hybridantriebsstränge können dabei auf unterschiedliche Art und Weise realisiert werden.

Ein Beispiel sind sogenannte serielle Hybridantriebsstränge, bei denen ein Ausgang eines Verbrennungsmotors mit einem Generator verbunden ist, wobei ein Abtrieb des Hybridantriebsstranges mit einem elektrischen Motor verbunden ist, und wobei Motor und Generator an eine gemeinschaftliche Batterie angeschlossen sind.

Parallele Hybridantriebsstränge sind dazu in der Lage, sowohl verbrennungsmotorische als auch elektromotorische Antriebsleistung auf einen Abtrieb zu übertragen. Hier ist in manchen Fällen (sogenannter P1-Hybridantriebsstrang) eine elektrische Maschine um eine Kurbelwelle herum angeordnet, und die Kurbelwelle ist über eine Anfahrkupplung mit einem Abtrieb verbindbar, und zwar in der Regel über ein Stufengetriebe.

Ferner ist es bekannt, bei einer solchen Ausgestaltung zwischen der elektrischen Maschine und dem Verbrennungsmotor eine weitere Kupplung vorzusehen (P2-Antriebsstrang).

Auch Hybridantriebsstränge, bei denen ein Verbrennungsmotor eine Achse des Fahrzeugs antreibt und eine elektrische Maschine eine andere Achse des Fahrzeugs antreibt, sind allgemein bekannt (axle-split).

Ferner sind Parallel-Hybridantriebsstränge mit Doppelkupplungsgetrieben bekannt, wobei eine elektrische Maschine an einen Eingang von einem der Teilgetriebe angeschlossen sein kann, oder mit einem Ausgang des Doppelkupplungsgetriebes verbunden sein kann.

Schließlich sind sogenannte leistungsverzweigende Hybridantriebsstränge bekannt, bei denen ein Überlagerungsgetriebe vorgesehen ist, welches zur Lastverteilung dient. Hierbei ist in der Regel ein Verbrennungsmotor mit einem Glied eines solchen Überlagerungsgetriebes verbunden. Eine elektrische Maschine, die hauptsächlich als Motor eingesetzt wird, ist mit einem weiteren Glied eines solchen Überlagerungsgetriebes verbunden. Ferner ist in vielen Fällen ein Generator mit einem weiteren Glied eines solchen Überlagerungsgetriebes verbunden.

Auch sind Hybridantriebsstränge mit mehreren derartigen Überlagerungsradsätzen bekannt.

Das Dokument DE 10 2010 030 567 A1 offenbart einen Hybridantrieb eines Kraftfahrzeuges, der einen Verbrennungsmotor mit einer Triebwelle, eine als Motor und als Generator betreibbare Elektromaschine mit einem Rotor und ein mehrstufiges Schaltgetriebe mit zwei Eingangswellen sowie einer gemeinsamen Ausgangswelle aufweist. Bei diesem Hybridantrieb ist vorgesehen, dass die beiden Eingangswellen koaxial und axial benachbart zueinander angeordnet sowie über eine Schaltkupplung unmittelbar miteinander koppelbar sind. Ferner ist vorgesehen, dass eine der beiden Eingangswellen in einen mit dem betreffenden Antriebsaggregator verbundenen oder verbindbaren axial äußeren Wellenabschnitt sowie in einen die Antriebsräder der zugeordneten Gangradsätze tragenden und mit der anderen Eingangswelle koppelbaren axial inneren Wellenabschnitt aufgetrennt ist. Ferner ist vorgesehen, dass ein Überlagerungsgetriebe mit zwei Eingangselementen und einem Ausgangselement vorgesehen ist, dessen Eingangselemente drehfest mit jeweils einem der beiden Wellenabschnitte verbunden sind, dessen Ausgangselement drehfest mit dem Antriebsrad eines zugeordneten Anfahr-Gangradsatzes verbunden oder verbindbar ist, wobei das Überlagerungsgetriebe über eine zwischen den beiden Eingangselementen angeordnete Überbrückungskupplung in sich sperrbar ist.

Das Dokument DE 10 2010 046 766 A1 offenbart eine Hybridantriebsvorrichtung mit einer Getriebeeinheit, die zumindest eine erste und eine zweite im Kraftfluss parallel geschaltete Teilgetriebeeinheit aufweist, die jeweils zur Schaltung von zumindest einem Getriebegang vorgesehen sind. Eine Anbindungseinheit ist direkt mit der ersten Teilgetriebeeinheit verbunden. Die Anbindungseinheit ist ferner direkt mit der zweiten Teilgetriebeeinheit verbunden.

Vor dem obigen Hintergrund ist es eine Aufgabe der Erfindung, eine verbesserte Getriebeanordnung für einen Hybridantriebsstrang sowie ein verbessertes Verfahren zum Betreiben eines Hybridantriebsstranges anzugeben.

Die obige Aufgabe wird gelöst durch eine Getriebeanordnung für einen Hybridantriebsstrang gemäß Anspruch 1, mit einer Getriebeeingangswelle, die mit einer ersten Antriebsmaschine verbindbar ist, mit wenigstens einer Getriebeausgangswelle, mit wenigstens einem mittels einer Gangschaltkupplung schaltbaren Gangradsatz, der die Getriebeeingangswelle und die Getriebeausgangswelle verbindet, um eine Gangstufe einzurichten, mit einem Überlagerungsradsatz, der ein erstes Eingangsglied, ein zweites Eingangsglied und ein Ausgangsglied aufweist, und mit einem Maschinenglied, das mit einer zweiten Antriebsmaschine verbindbar ist, wobei das Maschinenglied mit einem Glied des Überlagerungsradsatzes verbunden ist, wobei die Getriebeeingangswelle über eine schaltbare Brückenkupplung mit einem weiteren Glied des Überlagerungsradsatzes verbunden ist, wobei zwei Glieder des Überlagerungsradsatzes mittels einer Blockierkupplung miteinander verbindbar sind, und wobei die Brückenkupplung und die Blockierkupplung in einer Koppel-Schaltkupplungsanordnung integriert sind.

Ferner wird die obige Aufgabe gelöst durch ein Verfahren zum Betreiben eines Hybridantriebsstranges, der eine Getriebeanordnung der erfindungsgemäßen Art aufweist, und wobei das Verfahren dazu dient, ein mit dem Hybridantriebsstrang ausgestattetes Fahrzeug aus dem Stillstand anzufahren, mit den Schritten, die Blockierkupplung zu öffnen und die Brückenkupplung zu schließen, Antriebsleistung der ersten Antriebsmaschine auf die Getriebeeingangswelle zu übertragen, derart, dass das mit dem Maschinenglied verbundene Eingangsglied entsprechend der Drehzahl des mit der Getriebeeingangswelle verbundenen Gliedes des Überlagerungsradsatzes dreht und das Ausgangsglied stillsteht, und ein von der zweiten Antriebsmaschine bereitgestelltes Drehmoment zu erhöhen, so dass sich das Ausgangsglied des Überlagerungsradsatzes zu drehen beginnt und das Fahrzeug anfährt.

Die obige Aufgabe wird ferner gelöst durch ein Verfahren zum Betreiben eines Hybridantriebstranges, der eine Getriebeanordnung der erfindungsgemäßen Art aufweist, wobei ausgehend von einem Zustand, bei dem (i) Antriebsleistung sowohl von einer ersten Antriebsmaschine als auch von einer zweiten Antriebsmaschine bereitgestellt und auf die Getriebeausgangswelle übertragen wird, bei dem (ii) die Blockierkupplung (BL) und/oder die Brückenkupplung geschlossen ist bzw. sind und bei dem (iii) Antriebsleistung der ersten Antriebsmaschine oder Antriebsleistung der zweiten Antriebsmaschine über die geschlossene Blockierkupplung und/oder über die geschlossene Brückenkupplung geführt wird, folgende Schritte vor einem Schaltvorgang an der Koppel-Schaltkupplungsanordnung durchgeführt werden: Verringern eines von der einen Antriebsmaschine bereitgestellten Drehmomentes und entsprechendes Erhöhen eines von der anderen Antriebsmaschine bereitgestellten Drehmomentes, um ein über die geschlossene Blockierkupplung und/oder über die geschlossene Brückenkupplung übertragenes Drehmoment zu verringern.

Die erfindungsgemäße Getriebeanordnung ermöglicht eine kompakte Realisierung eines Hybridantriebsstranges. Ferner ist bei vergleichsweise kurzer axialer Baulänge eine Vielzahl von Gangstufen und Betriebsmodi realisierbar.

Die Getriebeanordnung eignet sich insbesondere zum Einbau in einen Hybridantriebsstranges in Front-Quer-Bauweise.

Die Getriebeeingangswelle kann entweder drehfest mit einer ersten Antriebsmaschine verbunden werden, insbesondere mit einer Kurbelwelle eines Verbrennungsmotors. Bevorzugt ist die Getriebeeingangswelle jedoch über eine Antriebskupplung mit der ersten Antriebsmaschine verbindbar.

Die Getriebeanordnung weist eine oder zwei Getriebeausgangswellen auf. Besonders bevorzugt weist die Getriebeanordnung genau eine Getriebeausgangswelle auf, die parallel versetzt zu der Getriebeeingangswelle ausgerichtet ist.

Der Gangradsatz oder die Mehrzahl von Gangradsätzen beinhalten vorzugsweise jeweils ein Losrad und ein Festrad, die miteinander in Eingriff stehen bzw. direkt miteinander kämmen. Eines dieser Räder ist dabei an der Getriebeeingangswelle angeordnet, das andere Rad an der Getriebeausgangswelle.

Der Überlagerungsradsatz ist vorzugsweise ein einfacher Planetenradsatz. Der Überlagerungsradsatz ist vorzugsweise koaxial zu der Getriebeeingangswelle angeordnet.

Das Maschinenglied ist vorzugsweise ein Wellenabschnitt, der koaxial zu der Getriebeeingangswelle angeordnet ist und drehbar in Bezug auf die Getriebeeingangswelle gelagert ist. Das Maschinenglied ist dabei vorzugsweise über einen Stirnradsatz mit der zweiten Antriebsmaschine verbunden, bei der es sich vorzugsweise um eine elektrische Maschine handelt, die als Motor oder als Generator betreibbar ist.

Die zweite Antriebsmaschine ist vorzugsweise so angeordnet, dass sie sich axial mit dem Überlagerungsradsatz und/oder axial mit dem schaltbaren Gangradsatz überlappt. Auch dies trägt zu einer kurzen axialen Bauweise bei.

Das Maschinenglied ist vorzugsweise mit dem ersten Eingangsglied des Überlagerungsradsatzes verbunden.

Die Getriebeeingangswelle ist vorzugsweise über die schaltbare Brückenkupplung mit dem zweiten Eingangsglied des Überlagerungsradsatzes verbunden.

Die zwei Glieder des Überlagerungsradsatzes, die mittels einer Blockierkupplung miteinander verbindbar sind, sind vorzugsweise das Ausgangsglied und eines der Eingangsglieder, vorzugsweise das zweite Eingangsglied des Überlagerungsradsatzes.

Die Brückenkupplung und die Blockierkupplung, die in ein Koppel-Schaltkupplungspaket integriert sind, sind vorzugsweise mittels eines einzelnen Schaltgliedes wie einer Schaltgabel oder Schaltschwinge betätigbar. Insbesondere weist das Koppel-Schaltkupplungspaket vorzugsweise eine Schaltmuffe auf, die axial betätigbar ist, um die Brückenkupplung und die Blockierkupplung zu schalten.

Die Getriebeanordnung ermöglicht eine Vielzahl von Betriebsmodi, einschließlich einer Parksperrenverriegelung, ohne dass ein separates Parksperrenrad vorzusehen ist.

Ferner ist ein Neutralzustand realisierbar, so dass beispielsweise ein Regelbetrieb einrichtbar ist, insbesondere ein Laden einer Batterie im Stillstand, wobei verbrennungsmotorische Leistung die als Generator betriebene Maschine antreibt.

Vorzugsweise sind mittels der ersten Antriebsmaschine wenigstens zwei Vorwärtsgangstufen einrichtbar, insbesondere drei Vorwärtsgangstufen.

Über den Überlagerungsradsatz können Antriebsleistung der ersten Antriebsmaschine und Antriebsleistung der zweiten Antriebsmaschine überlagert und aufsummiert werden, damit sie gemeinschaftlich auf einen Abtrieb übertragen werden.

Zudem ist vorzugsweise vorgesehen, dass der Eingangswelle zwei Vorwärtsgangstufen zugeordnet sind, die nicht unmittelbar benachbart sind. Vorzugsweise sind die zwei Vorwärtsgangstufen alternativ schaltbar.

Eine zwischen diesen Gangstufen liegende weitere Vorwärtsgangstufe (beispielsweise Gangstufe 2 zwischen den Gangstufen 1 und 3) kann dann insbesondere bei geschlossener Brückenkupplung verwendet werden.

Durch diese Gangstufenaufteilung ist es auch möglich, dass Gangwechsel bei einem Betrieb von nur einer der zwei Antriebsmaschinen so durchgeführt werden können, dass eine ggf. auftretende Zugkraftunterbrechung durch Bereitstellung von Antriebsleistung der anderen Antriebsmaschine kompensiert werden kann ("torque fill"). Folglich kann zumindest eine Mehrzahl von Gangwechseln zugkraftunterbrechungsfrei durchgeführt werden, oder zumindest mit nur geringem Zugkrafteinbruch.

Der Hybridantriebsstrang, der mit der erfindungsgemäßen Getriebeanordnung ausgestattet ist, ermöglicht einen Antrieb alleine mittels der ersten Antriebsmaschine und einen Antrieb alleine mittels der zweiten Antriebsmaschine, also beispielsweise einen rein verbrennungsmotorischen Antrieb und einen rein elektromotorischen Antrieb.

Durch das Überlagerungsgetriebe und die Möglichkeit der Verbindung der ersten Antriebsmaschine mit der zweiten Antriebsmaschine über den Überlagerungsradsatz, ohne dass zwei Glieder dieses Radsatzes gesperrt sind (offene Blockierkupplung), wird zudem die Betriebsweise eines elektrisch variablen Getriebes (EVT) ermöglicht, die einen Anfahrvorgang ermöglicht, ohne dass eine Reibkupplung zu belasten ist, wie es beispielsweise in Anspruch 14 beansprucht ist.

Die Antriebskupplung, sofern vorhanden, kann dabei als Klauenkupplung ausgeführt sein.

Auch die Gangschaltkupplung kann eine Schaltkupplung beinhalten, die als Klauenkupplung realisiert ist.

Auch die Brückenkupplung und/oder die Blockierkupplung können ggf. als Klauenkupplungen realisiert sein.

Da es bei der erfindungsgemäßen Getriebeanordnung generell möglich ist, Drehzahlen der ersten Antriebsmaschine und der zweiten Antriebsmaschine aneinander anzugleichen, müssen diese Kupplungen ggf. nicht als Synchron-Schaltkupplungen ausgebildet sein, und eine Synchronisierung von Schaltvorgängen an solchen Schaltkupplungen kann vielmehr durch Angleichen der Drehzahlen erfolgen, insbesondere durch Regeln der Drehzahl der elektrischen Maschine. Auch ist mit der erfindungsgemäßen Getriebeanordnung ggf. ein Mischbetrieb möglich ("intermed"), bei dem Antriebsleistung beispielsweise über die Gangschaltkupplung übertragen wird, gleichzeitig jedoch eine Überlagerung von Antriebsleistung in dem Überlagerungsradsatz stattfindet.

Insgesamt kann mit der erfindungsgemäßen Getriebeanordnung erreicht werden, dass ohne Verlust an Zugkraft der stärkeren Antriebsmaschine ein Gangwechsel zwischen Gangstufen erfolgen kann, ohne hierbei kraftschlüssige Schaltelemente verwenden zu müssen.

Bei dem erfindungsgemäßen Verfahren, bei dem das von der einen Antriebsmaschine bereitgestellte Drehmoment verringert und das von der anderen Antriebsmaschine bereitgestellte Drehmoment entsprechend erhöht werden, kann gezielt eine geschlossene Schaltkupplung der Getriebeanordnung entlastet werden, um diese Schaltkupplung einfacher öffnen zu können.

Die Schaltkupplung kann dabei Teil der Koppel-Schaltkupplungsanordnung sein.

Wie oben erwähnt, ist ein Mischbetrieb möglich, der in der Regel an ein Übersetzungsverhältnis einer Gangstufe eines Gangradsatzes gebunden ist. Aus einem solchen Mischbetrieb kann jede andere Vorwärtsgangstufe erreicht werden. Folglich kann vorzugsweise jede andere Schaltung gestützt werden.

Die erste und die zweite Antriebsmaschine können deutlich unterschiedlich stark sein.

Vorzugsweise ist die maximale Ausgangsleistung der zweiten Antriebsmaschine kleiner als jene der ersten Antriebsmaschine. Das Verhältnis von maximaler Ausgangsleistung der zweiten Antriebsmaschine zu maximaler Ausgangsleistung der ersten Antriebsmaschine liegt vorzugsweise in einen Bereich von 1:4 bis 1:1,2, insbesondere im Bereich von 1:3 bis 1:1,5.

Die Aufgabe wird vollkommen gelöst.

In einer bevorzugten Ausführungsform weist die Koppel-Schaltkupplungsanordnung zwei Betätigungsglieder auf, um die Blockierkupplung und die Brückenkupplung unabhängig voneinander betätigen zu können.

Die Betätigungsglieder können insbesondere Schaltmuffen sein, die beispielsweise mittels jeweiliger Schaltgabeln oder Schaltwippen axial innerhalb der Getriebeanordnung verschiebbar sind.

Sowohl die Blockierkupplung als auch die Brückenkupplung haben vorzugsweise jeweils zwei Schaltstellungen, eine geöffnete und eine geschlossene Stellung.

Gemäß einer alternativen Ausführungsform weist die Koppel-Schaltkupplungsanordnung ein einzelnes Betätigungsglied zum Betätigen der Brückenkupplung und der Blockierkupplung auf, wobei die Koppel-Schaltkupplungsanordnung eine erste Schaltstellung aufweist, in der die Blockierkupplung geschlossen ist, und eine zweite Schaltstellung aufweist, in der die Brückenkupplung geschlossen ist.

Vorzugsweise weist die Koppel-Schaltkupplungsanordnung bei dieser Ausführungsform eine dritte Schaltstellung auf, in der die Blockierkupplung und die Brückenkupplung beide geschlossen sind.

Bei der einen, wie der anderen Alternative sind die Betätigungsglieder bzw. das Betätigungsglied vorzugsweise an einer einzelnen Führungsmuffe (auch als Synchronkörper bezeichnet) axial verschieblich, jedoch drehfest hiermit verbunden. Die Führungsmuffe ist dabei starr mit einer Welle verbunden, an der die Koppel-Schaltkupplungsanordnung angeordnet ist.

Bei den Betätigungsgliedern handelt es sich vorzugsweise um Schaltmuffen, die mittels jeweiliger Schaltgabeln oder Schaltwippen axial verschieblich sind.

Bei der ersten Alternative ist es denkbar, dass beide Kupplungen, also die Blockierkupplung und die Brückenkupplung offen sind. Dieser Zustand wird jedoch in der Regel in der Getriebeanordnung nicht benötigt. Bei der zweiten Alternative weist die Koppel-Schaltkupplungsanordnung vorzugsweise nur drei Schaltstellungen auf, und ermöglicht nicht ein gleichzeitiges Öffnen der Brückenkupplung und der Blockierkupplung.

In der ersten Schaltstellung der zweiten Alternative ist die Brückenkupplung vorzugsweise geöffnet. In der zweiten Schaltstellung ist die Blockierkupplung vorzugsweise geöffnet.

Die Realisierung einer Koppel-Schaltkupplungsanordnung, das genau drei Schaltstellungen aufweist, ist konstruktiv vergleichsweise einfach realisierbar.

Insgesamt ist es ferner bevorzugt, wenn das Ausgangsglied des Überlagerungsradsatzes über einen Koppelradsatz mit der Getriebeausgangswelle verbindbar oder verbunden ist.

Der Koppelradsatz weist vorzugsweise ebenfalls zwei Zahnräder auf, von denen eines koaxial zu dem Überlagerungsradsatz gelagert ist, und von denen das andere koaxial zu der Getriebeausgangswelle gelagert ist. Diese Zahnräder stehen miteinander in Eingriff. Die Übersetzung, die durch den Koppelradsatz realisiert ist, ist vorzugsweise eine Übersetzung, die an die wenigstens eine Gangstufe angepasst ist, die über den schaltbaren Gangradsatz einrichtbar ist, der die Getriebeeingangswelle und die Getriebeausgangswelle verbindet.

Gemäß einer weiteren insgesamt bevorzugten Ausführungsform, die in Verbindung mit dem Oberbegriff des Anspruchs 1 eine eigene Erfindung darstellt, ist das Ausgangsglied des Überlagerungsradsatzes über einen Koppelradsatz mit der Getriebeausgangswelle verbindbar bzw. verbunden, und der Koppelradsatz weist ein erstes Losrad auf, das an einer Koppelwelle drehbar gelagert ist, die mit dem Ausgangsglied des Überlagerungsradsatzes fest verbunden ist, und/oder der Koppelradsatz weist ein zweites Losrad auf, das an der Getriebeausgangswelle drehbar gelagert ist.

Besonders bevorzugt ist es, wenn der Koppelradsatz sowohl das erste als auch das zweite Losrad aufweist, derart, dass selbst bei einem Zustand, bei dem das zweite Losrad über eine zugeordnete Schaltkupplung mit der Getriebeausgangswelle verbunden ist, die Koppelwelle ggf. dennoch frei drehbar sein kann, wenn nämlich das erste Losrad von der Koppelwelle entkoppelt ist.

Eine mittels des Koppelradsatzes eingerichtete Gangstufe liegt vorzugsweise zwischen Gangstufen, die durch Gangradsätze einrichtbar sind, die die Getriebeeingangswelle und die Getriebeausgangswelle verbinden.

Ferner ist es vorteilhaft, wenn in axialer Richtung zwischen dem Überlagerungsradsatz und der Koppel-Schaltkupplungsanordnung wenigstens ein Koppelradsatz angeordnet ist.

Vorzugsweise ist das Ausgangsglied des Überlagerungsradsatzes über genau einen Koppelradsatz mit der Getriebeausgangswelle verbunden.

Insgesamt kann eine axial kompakte Bauweise realisiert werden.

Ferner ist es vorteilhaft, wenn das Maschinenglied mit der zweiten Antriebsmaschine auf einer axialen Seite des Überlagerungsradsatzes verbindbar ist, die dem ersten Gangradsatz und/oder der Brückenkupplung und/oder der Blockierkupplung gegenüberliegt.

Hierdurch ist es möglich, das Maschinenglied auf unterschiedlichste Art und Weise mit der zweiten Antriebsmaschine zu verbinden.

Von besonderem Vorzug ist es, wenn das Maschinenglied mit einem Zahnrad eines Maschinenradsatzes verbunden ist, über den die zweite Antriebsmaschine mit dem Maschinenglied verbindbar ist.

Der Maschinenradsatz ist vorzugsweise ein Stirnradsatz, derart, dass die zweite Antriebsmaschine überlappend zu dem Überlagerungsradsatz und/oder zu dem Koppelradsatz und/oder zu dem Gangradsatz angeordnet werden kann.

Über einen solchen Maschinenradsatz lässt sich zudem eine hohe Übersetzung zwischen der zweiten Antriebsmaschine und dem Maschinenglied einrichten, so dass die elektrische Maschine mit hohen Drehzahlen betrieben werden kann, so dass die elektrische Maschine kompakt ausgebildet werden kann.

Gemäß einer weiteren insgesamt bevorzugten Ausführungsform sind die Getriebeeingangswelle und die Getriebeausgangswelle über genau zwei Gangradsätze miteinander verbunden, über die jeweils eine Direkt-Gangstufe für die erste Antriebsmaschine einrichtbar sind.

Wie erwähnt, kann ein Koppelradsatz zum Einrichten einer Gangstufe für die erste Antriebsmaschine dienen, die zwischen den Direkt-Gangstufen liegt. Die mittels eines Koppelradsatzes schaltbare Gangstufe ist dabei vorzugsweise über das Betätigen von zwei Schaltkupplungen schaltbar, vorzugsweise durch Schließen der Blockierkupplung und einer Schaltkupplung, die dem Koppelradsatz zugeordnet ist.

Wie erwähnt, kann die erste Antriebsmaschine starr mit der Getriebeeingangswelle verbunden sein. Bevorzugt ist die erste Antriebsmaschine jedoch über eine Antriebskupplung mit der Getriebeeingangswelle verbindbar.

Ferner ist es insgesamt vorteilhaft, wenn das erste Eingangsglied ein Hohlrad des Überlagerungsradsatzes ist und/oder wenn das zweite Eingangsglied ein Sonnenrad des Überlagerungsradsatzes ist und/oder wenn das Ausgangsglied ein Planetenträger des Überlagerungsradsatzes ist.

Dies ermöglicht eine kompakte Bauweise.

Gemäß einer weiteren bevorzugten Ausführungsform, die in Verbindung mit dem Oberbegriff des Anspruchs 1 eine eigene Erfindung darstellt, ist das Maschinenglied mit einem Hohlrad des Überlagerungsradsatzes verbunden, wobei ein Sonnenrad des Überlagerungsradsatzes über die Brückenkupplung mit der Getriebeeingangswelle verbindbar ist.

Auch diese Maßnahme führt zu einer besonders kompakten und variablen Bauweise.

Dabei ist es vorteilhaft, wenn ein Planetenträger auf einer der Brückenkupplung zugewandten axialen Seite mit einem Koppelradsatz verbunden ist, der den Planetenträger mit der Getriebeausgangswelle verbindet.

Bei dem Verfahren zum Betreiben eines Hybridantriebsstranges, bei dem das Drehmoment von einer Antriebsmaschine verringert und das Drehmoment der anderen Antriebsmaschine entsprechend erhöht wird, um ein über die geschlossene Blockierkupplung und/oder über die geschlossene Brückenkupplung übertragenes Drehmoment zu verringern, ist es von besonderem Vorzug, wenn der Schaltvorgang nach dem Verringern des über die geschlossene Blockierkupplung und/oder über die geschlossene Brückenkupplung übertragenen Drehmomentes durchgeführt wird, sobald das über die geschlossene Blockierkupplung und/oder über die geschlossene Brückenkupplung übertragenen Drehmoment einen Schwellenwert unterschritten hat.

Ferner ist es hierbei insbesondere vorteilhaft, wenn der Schaltvorgang beinhaltet, eine Schaltkupplung der Koppel-Schaltkupplungsanordnung zu öffnen.

Ferner ist es hierbei insbesondere vorteilhaft, das Verhältnis aus Drehzahl der ersten Antriebsmaschine und Drehzahl der zweiten Antriebsmaschine konstant zu halten, wenn das Drehmoment der ersten Antriebsmaschine verringert und das Drehmoment der anderen Antriebsmaschine erhöht wird.

Bei der erfindungsgemäßen Getriebeanordnung kann es in manchen Situationen, bei denen über die Brückenkupplung und/oder über die Blockierkupplung Drehmoment übertragen wird, schwierig sein, diesen geschlossenen Zustand der jeweiligen Kupplung zu beenden, also die Kupplung zu öffnen. Dies kann an Hinterlegungen von Axialverzahnungen der Kupplungen liegen, oder einfach nur an besonders hohen Drehmomenten, die eine entsprechende Reibkraft in axialer Richtung aufbauen.

Um den Verschleiß zu vermindern und um ein Öffnen der jeweiligen Kupplung mit Sicherheit realisieren zu können, wird das erfindungsgemäße Verfahren durchgeführt, bei dem das Drehmoment jener Antriebsmaschine verringert wird, die verantwortlich ist für das an der Brücken- und/oder Blockierkupplung anliegende Drehmoment.

Um gleichzeitig einen Zugkrafteinbruch zu vermeiden, wird das Drehmoment der anderen Antriebsmaschine erhöht. Vorzugsweise hat die Erhöhung dieses Drehmomentes der anderen Antriebsmaschine keinen drehmomenterhöhenden Einfluss auf die Blockierkupplung und/oder die Brückenkupplung.

Bei der Ausführungsform, bei der die Koppel-Schaltkupplungsanordnung zwei Betätigungsglieder aufweist, um die Blockierkupplung und die Brückenkupplung unabhängig voneinander betätigen zu können, ist es vorzugsweise möglich, bei Schaltvorgängen lediglich einen lastfreien Schaltkupplungsteil zu bewegen. Demzufolge ergibt sich vorzugsweise eine geringere Anforderung an die Kraft zum Schalten der Koppel-Schaltkupplungsanordnung. Ferner kann gegebenenfalls eine Hysterese aufgrund eines Schaltens unter Last vermieden oder verringert werden. Zudem kann ein kleines Spiel zwischen Schaltgabel und Schaltmuffe nach dem Schalten leichter gewährleistet werden. Insgesamt können Schaltvorgänge leichter gesteuert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Figur 1 eine schematische Darstellung eines Kraftfahrzeugantriebsstranges mit einer ersten Ausführungsform einer erfindungsgemäßen Getriebeanordnung, wobei der Antriebsstrang zur Durchführung des erfindungsgemäßen Verfahrens ausgelegt ist.
Figur 2 eine Darstellung einer Koppel-Schaltkupplungsanordnung in drei unterschiedlichen Schaltstellungen;
Figur 3 eine schematische Darstellung eines weiteren Hybridantriebsstranges mit einer weiteren Ausführungsform einer erfindungsgemäßen Getriebeanordnung;
Figur 4 eine schematische Darstellung eines Hybridantriebsstranges mit einer weiteren Ausführungsform einer erfindungsgemäßen Getriebeanordnung;
Figur 5 eine schematische Darstellung eines Hybridantriebsstranges mit einer weiteren Ausführungsform einer erfindungsgemäßen Getriebeanordnung;
Figur 6 eine Schalttabelle mit den unterschiedlichen Zuständen bzw. Gangstufen der Getriebeanordnung der Fig. 1 und mit den hierbei bedarfsweise geschalteten Schaltkupplungen;
Figur 7 den Leistungsfluss bei einem Zustand E1 der Getriebeanordnung der Fig. 1;
Figur 8 den Leistungsfluss bei einem Zustand ICE1&E1 bei der Getriebeanordnung der Fig. 1;
Figur 9 den Leistungsfluss bei einem Zustand ICE1 bei der Getriebeanordnung der Fig. 1
Figur 10 den Leistungsfluss bei einem Zustand ICE1&E2 bei der Getriebeanordnung der Fig. 1;
Figur 11 den Leistungsfluss bei einem Zustand ICE2&E2 bei der Getriebeanordnung der Fig. 1;
Figur 12 den Leistungsfluss bei einem Zustand EVT2 bei der Getriebeanordnung der Fig. 1;
Figur 13 den Leistungsfluss bei einem Zustand Intermed 2,1 bei der Getriebeanordnung der Fig. 1;
Fig. 14 eine der Fig. 2 entsprechende Darstellung einer alternativen Ausführungsform einer Koppel-Schaltkupplungsanordnung in drei unterschiedlichen Schaltstellungen; und
Fig. 15 eine der Fig. 6 entsprechende Schalttabelle mit unterschiedlichen Zuständen bzw. Gangstufen für eine Getriebeanordnung auf der Grundlage der Figuren 1 und 14.

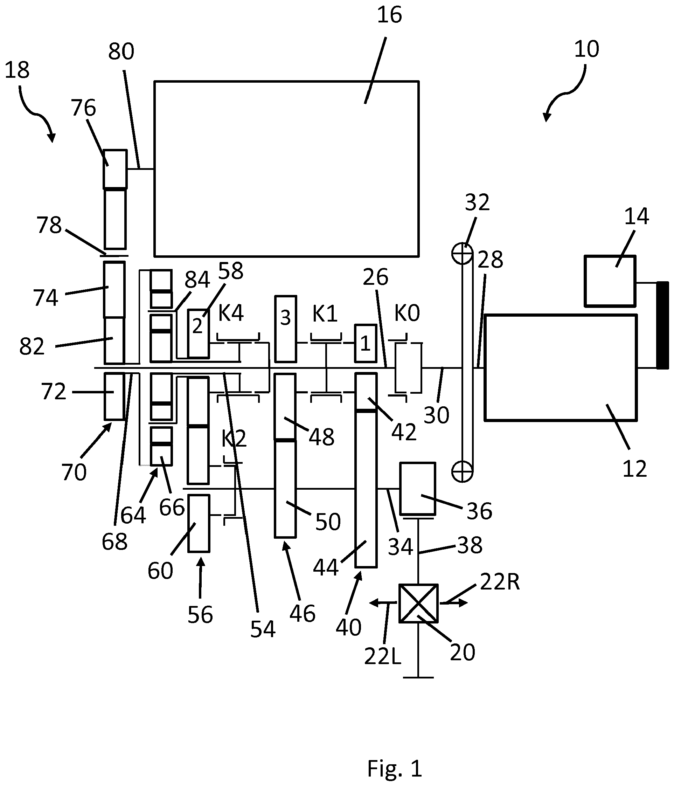

In Fig. 1 ist in schematischer Form ein Antriebsstrang für ein Kraftfahrzeug dargestellt und generell mit 10 bezeichnet.

Der Antriebsstrang 10 weist eine erste Antriebsmaschine in Form eines Verbrennungsmotors 12 auf. Der Verbrennungsmotor 12 kann mit einem Anlasser 14 verbunden sein. Ferner beinhaltet der Antriebsstrang 10, der als Hybridantriebsstrang ausgebildet ist, eine zweite Antriebsmaschine 16 in Form einer elektrischen Maschine.

Der Antriebsstrang 10 weist ferner eine Getriebeanordnung 18 auf, die mit der ersten Antriebsmaschine 12 und mit der zweiten Antriebsmaschine 16 verbunden ist. Ausgangsseitig ist die Getriebeanordnung 18 mit einem Differential 20 verbunden, mittels dessen Antriebsleistung auf angetriebene Räder 22L, 22R verteilbar ist.

Die Getriebeanordnung 18 weist eine Getriebeeingangswelle 26 auf. Ferner ist ein Eingangsglied 28 eines Massenschwungrades 32 mit einer Kurbelwelle der ersten Antriebsmaschine 12 verbunden. Ein Ausgangsglied 30 des Massenschwungrades 32 ist über eine Kupplung K0, die als Klauenkupplung ausgebildet sein kann, mit der Getriebeeingangswelle 26 verbunden.

Die erste Antriebsmaschine 12 ist koaxial zu der Getriebeeingangswelle 26 angeordnet. Sie könnte jedoch auch über eine Stirnradanordnung mit der Getriebeeingangswelle 26 verbunden sein.

Die Getriebeanordnung 18 weist ferner eine Getriebeausgangswelle 34 auf, die parallel versetzt zu der Getriebeeingangswelle 26 ausgerichtet ist.

An der Getriebeausgangswelle 34 ist ein Abtriebszahnrad 36 festgelegt, das mit einem Differentialzahnrad 38 in Eingriff steht, das mit einem Differentialkorb des Differentials 20 drehfest verbunden ist.

Die Getriebeeingangswelle 26 und die Getriebeausgangswelle 34 sind über einen ersten Gangradsatz 14 miteinander verbunden, der ein an der Getriebeeingangswelle 26 gelagertes Losrad 42 und ein mit der Getriebeausgangswelle 34 verbundenes Festrad 44 beinhaltet. Der erste Gangradsatz ist einer Vorwärtsgangstufe 1 zugeordnet, die die niedrigste Vorwärtsgangstufe der Getriebeanordnung 18 bildet.

Die Getriebeeingangswelle 26 ist ferner über einen zweiten Gangradsatz 46 mit der Getriebeausgangswelle 34 verbunden, wobei der zweite Gangradsatz 46 ein an der Getriebeeingangswelle 26 drehbar gelagertes Losrad 48 sowie ein Festrad 50 aufweist, das an der Getriebeausgangswelle 34 festgelegt ist.

Das Losrad 42 kämmt vorzugsweise mit dem Festrad 44. Das Losrad 48 kämmt vorzugsweise mit dem Festrad 50.

In axialer Richtung zwischen dem ersten Gangradsatz 40 und dem zweiten Gangradsatz 46 ist ein Schaltkupplungspaket K1 angeordnet, das zwei Schaltkupplungen beinhaltet. Mittels des Schaltkupplungspaketes K1 kann die Getriebeeingangswelle 26 alternativ über den ersten Gangradsatz 40 oder über den zweiten Gangradsatz 46 mit der Getriebeausgangswelle 46 verbunden werden.

Der Begriff der Verbindung soll vorliegend bedeuten, dass über diese Verbindung Antriebsleistung übertragen werden kann. Eine Verbindung kann folglich eine mögliche (beispielsweise über eine Schaltkupplung herstellbare) Verbindung sein, kann jedoch auch eine Verbindung sein, die beispielsweise die verbundenen Glieder in ein festes Drehzahlverhältnis setzt.

Bei geschlossener Antriebskupplung K0 kann ein verbrennungsmotorischer Betrieb mittels des ersten Gangradsatzes 40 eingerichtet werden, wobei die Vorwärtsgangstufe 1 eingelegt ist. Alternativ kann ein Fahrbetrieb mittels der ersten Antriebsmaschine 12 über die Kupplung K0 eingerichtet werden, bei dem der zweite Gangradsatz 46 in den Leistungsfluss geschaltet ist, um die Vorwärtsgangstufe 3 einzulegen.

An der Getriebeeingangswelle 26 ist eine Koppelwelle 54 drehbar gelagert, die als Hohlwelle um die Getriebeeingangswelle 26 herum ausgebildet ist.

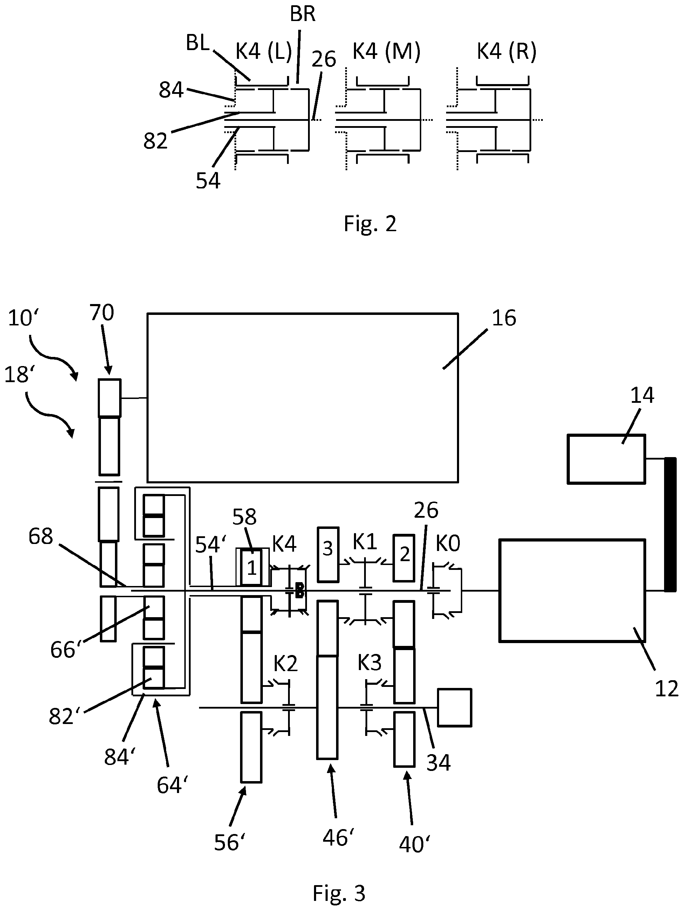

Die Getriebeeingangswelle 26 ist über eine Brückenkupplung BR (siehe Fig. 2) mit der Koppelwelle 54 verbindbar.

An der Koppelwelle 54 ist ein erstes Losrad 58 eines Koppelradsatzes 56 drehbar gelagert. Der Koppelradsatz 56 weist ferner ein zweites Losrad 60 auf, das drehbar an der Getriebeausgangswelle 34 gelagert ist.

Das erste Losrad 58 ist mittels einer Blockierkupplung BL mit der Koppelwelle 54 verbindbar. Das zweite Losrad 60 ist mittels einer Schaltkupplung K2 mit der Getriebeausgangswelle 34 verbindbar.

Die Brückenkupplung BR und die Blockierkupplung BL sind in einer Koppel-Schaltkupplungsanordnung K4 integriert, die, wie es in Fig. 2 gezeigt ist, drei Schaltstellungen besitzt und mittels eines einzelnen Betätigungsgliedes wie eine einzelnen Schaltmuffe betätigbar ist.

In einer ersten Schaltstellung K4(L) ist die Blockierkupplung BL geschlossen und die Brückenkupplung BR ist geöffnet.

In einer axial gegenüberliegenden Schaltstellung K4(R) ist die Brückenkupplung BR geschlossen und die Blockierkupplung BL ist geöffnet.

Ferner kann mit der Koppel-Schaltkupplungsanordnung K4 eine mittlere Schaltstellung K4(M) eingerichtet werden. In der mittleren Schaltstellung K4(M) sind sowohl die Blockierkupplung BL als auch die Brückenkupplung BR geschlossen.

Die Koppel-Schaltkupplungsanordnung K4 ist koaxial zu der Getriebeeingangswelle 26 angeordnet. Die Schaltkupplung K2 ist koaxial zu der Getriebeausgangswelle 34 angeordnet.

Die Koppel-Schaltkupplungsanordnung K4 und die Schaltkupplung K2 sind axial miteinander ausgerichtet. Sie liegen beide in axialer Richtung zwischen dem zweiten Gangradsatz 46 und dem Koppelradsatz 56.

Die Getriebeanordnung 18 beinhaltet ferner einen Überlagerungsradsatz 64.

Der Überlagerungsradsatz 64 weist ein erstes Eingangsglied 66 in Form eines Hohlrades auf. Das erste Eingangsglied 66 ist mit einem Maschinenglied 68 verbunden, das als Hohlwellenabschnitt um die Getriebeeingangswelle 26 herum ausgebildet ist und drehbar in Bezug auf die Getriebeeingangswelle 26 ist.

Das Maschinenglied 68 ist über einen Maschinenradsatz 70 mit der zweiten Antriebsmaschine 16 verbunden. Der Maschinenradsatz 70 weist ein erstes Zahnrad 72 auf, das drehfest mit dem Maschinenglied 68 verbunden ist, und zwar koaxial hierzu. Ferner beinhaltet der Maschinenradsatz 70 ein zweites Zahnrad 74, das mit dem ersten Zahnrad 72 in Eingriff steht. Das zweite Zahnrad 74 steht mit einem Antriebsritzel 76 der zweiten Antriebsmaschine 16 in Eingriff.

Das zweite Zahnrad 74 ist drehbar an einer Zwischenwelle 78 gelagert, die koaxial versetzt zu der Getriebeeingangswelle 26 und vorzugsweise auch koaxial versetzt zu der Getriebeausgangswelle 34 ausgerichtet ist.

Die zweite Antriebsmaschine 16 weist eine Maschinenwelle 80 auf, die koaxial zu dem Antriebsritzel 76 ausgerichtet und drehfest hiermit verbunden ist. Die Maschinenwelle 80 ist parallel versetzt sowohl zu der Getriebeeingangswelle 26 als auch zu der Getriebeausgangswelle 34.

Das Maschinenglied 68 ist auf einer axialen Seite des Überlagerungsradsatzes 64 mit dem ersten Eingangsglied 66 verbunden, die dem Koppelradsatz 56 gegenüberliegt. Mit anderen Worten ist der Überlagerungsradsatz 64 in axialer Richtung zwischen dem Koppelradsatz 56 und dem Maschinenradsatz 70 angeordnet.

Der Überlagerungsradsatz 64 weist ferner ein zweites Eingangsglied 82 auf, das vorliegend durch das Sonnenrad gebildet ist. Das zweite Eingangsglied 82 ist drehfest mit der Koppelwelle 54 verbunden.

Der Überlagerungsradsatz 64 weist ferner ein Ausgangsglied 84 auf, das vorliegend als Planetenträger ausgebildet ist. Der Planetenträger ist drehfest mit dem ersten Losrad 58 des Koppelradsatzes 56 verbunden.

In den Fig. 3 bis 5 sind weitere Ausführungsformen von Antriebssträngen 10', 10", 10"' gezeigt, die jeweils Getriebeanordnungen 18', 18" bzw. 18"' aufweisen. Die Getriebeanordnungen 18', 18", 18"' der Fig. 3 bis 5 entsprechen hinsichtlich Aufbau und Funktionsweise generell der Getriebeanordnung 18 der Fig. 1. Gleiche Elemente sind daher mit gleichen Bezugszeichen gekennzeichnet. Im Folgenden werden im Wesentlichen die Unterschiede erläutert.

Fig. 3 zeigt eine Getriebeanordnung 18', bei der der erste Gangradsatz 40' zum Einrichten der Vorwärtsgangstufe 2 dient. Der erste Gangradsatz 40' weist dabei im Gegensatz zu der Ausführungsform der Fig. 1 ein Losrad anstelle des Festrades 44 auf, wobei das Losrad des ersten Gangradsatzes 40' mittels einer Schaltkupplung K3 mit der Getriebeausgangswelle 34 verbindbar ist.

Der zweite Gangradsatz 46' ist wie bei der Ausführungsform der Fig. 1 der Vorwärtsgangstufe 3 zugeordnet.

Der Überlagerungsradsatz 64' weist ein Eingangsglied 66' in Form eines Sonnenrades auf, das drehfest mit dem Maschinenglied 68 verbunden ist. Der Überlagerungsradsatz 64' weist ferner ein zweites Eingangsglied 82' in Form des Hohlrades auf, das vorliegend mit einer Koppelwelle 54' verbunden ist, die als Innenwelle koaxial zu der Getriebeeingangswelle 26 ausgebildet ist.

Der Koppelradsatz 56' ist der Vorwärtsgangstufe 1 zugeordnet und weist ein Losrad auf, das drehbar an der Koppelwelle 54' gelagert ist.

Das drehbar an der Koppelwelle 54' gelagerte Losrad des Koppelradsatzes 56' ist drehfest verbunden mit einem Ausgangsglied 84' des Überlagerungsradsatzes 64', wobei das Ausgangsglied 84' vorliegend als Planetenträger ausgebildet ist. Der Planetenträger 82' erstreckt sich dabei auf einer dem Koppelradsatz 56' abgewandten axialen Seite aus dem Überlagerungsradsatz 64' axial heraus und bildet radial außen um das Hohlrad 82' herum einen Ausgangs-Antriebskorb, der drehfest mit dem Losrad 58 des Koppelradsatzes 56' verbunden ist.

Das Koppel-Schaltkupplungspaket K4 kann, wie bei der Ausführungsform der Fig. 1 und 2, drei Schaltstellungen beinhalten. Alternativ hierzu kann die Koppel-Schaltkupplungsanordnung K4 auch nur zwei Schaltstellungen beinhalten, so dass entweder die Brückenkupplung BR geschlossen ist, um die Getriebeeingangswelle 26 mit der Koppelwelle 54' zu verbinden, oder es ist nur die Blockierkupplung BL geschlossen, um das an der Koppelwelle 54' gelagerte Losrad des Koppelradsatzes 56' mit der Koppelwelle 54' drehfest zu verbinden, und folglich zwei Glieder 82', 84' des Überlagerungsradsatzes 54' miteinander zu verbinden.

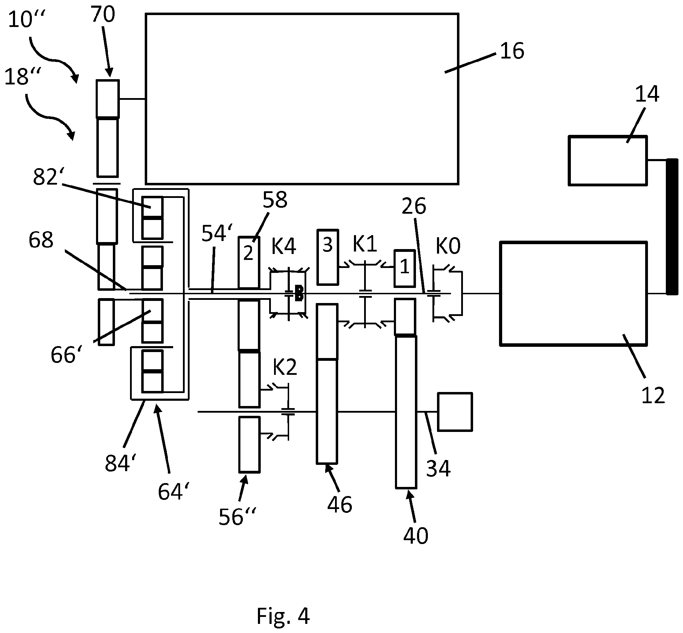

Die in Fig. 4 gezeigte Getriebeanordnung 18" entspricht hinsichtlich ihres Aufbaus generell der Getriebeanordnung 18 der Fig. 1.

Im Unterschied hierzu ist die Koppelwelle 54' wiederum als Innenwelle ausgebildet und koaxial zu der Getriebeeingangswelle 26 ausgerichtet. An der Koppelwelle 54' ist ein Losrad 58 des Koppelradsatzes 56" drehbar gelagert, welches wiederum wie bei der Ausführungsform der Fig. 3 mit dem Planetenträger 84' des Überlagerungsradsatzes 54' verbunden ist, der hinsichtlich Aufbau und Funktionsweise dem Überlagerungsradsatz 64' der Fig. 3 entspricht. Mit anderen Worten ist das erste Eingangsglied 66 in Form eines Sonnenrades mit dem Maschinenglied 68 verbunden.

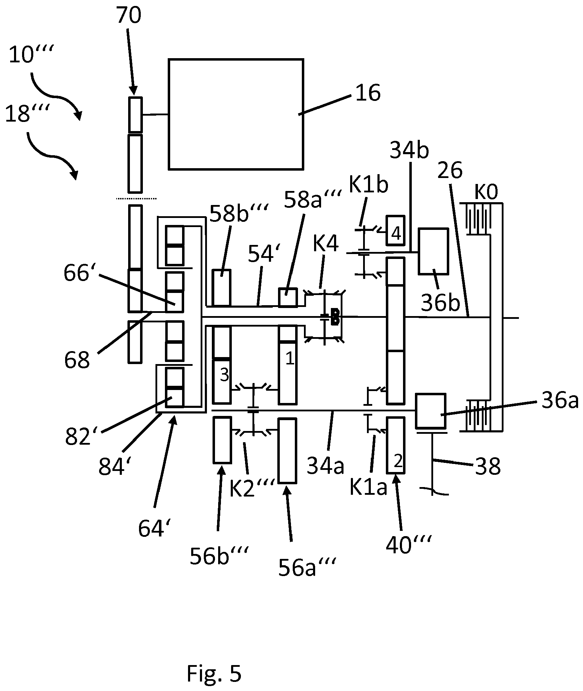

Bei der Getriebeanordnung 18"' der Fig. 5 ist anstelle einer einzelnen Getriebeausgangswelle 34 eine Ausgangswellenanordnung aus einer ersten Getriebeausgangswelle 34a und einer zweiten Getriebeausgangswelle 34b vorgesehen. Die zwei Getriebeausgangswellen 34a, 34b weisen jeweils ein Abtriebszahnrad 36a bzw. 36b auf, die beide mit dem Differentialzahnrad 38 in Eingriff stehen.

Der erste Gangradsatz 40"' weist ein mit der Getriebeeingangswelle 26 drehfest verbundenes Festrad auf, das zum einen mit einem Losrad an der ersten Getriebeausgangswelle 34a in Eingriff steht, und zum anderen mit einem Losrad in Eingriff steht, das an der zweiten Getriebeausgangswelle 34b drehbar gelagert ist.

Das an der Getriebeausgangswelle 34a gelagerte Losrad des ersten Gangradsatzes 40"' ist der Vorwärtsgangstufe 2 zugeordnet und mittels einer koaxial zu der Getriebeausgangswelle 34a angeordneten Schaltkupplung K1a mit der Getriebeausgangswelle 34a verbindbar.

Das an der zweiten Getriebeausgangswelle 34b gelagerte Losrad ist der Vorwärtsgangstufe 4 zugeordnet und mittels einer koaxial hierzu vorgesehenen Schaltkupplung K1b mit der zweiten Getriebeausgangswelle 34b verbindbar.

Wie bei den Ausführungsformen der Fig. 3 und 4 ist die Koppelwelle 54' als Innenwelle koaxial zu der Getriebeeingangswelle 26 angeordnet. Ferner beinhaltet die Getriebeanordnung 18"' den gleichen Überlagerungsradsatz 64' der Fig. 3 und 4, wobei das Hohlrad 82' drehfest mit der Koppelwelle 54' verbunden ist und wobei das Sonnenrad 66' drehfest mit dem Maschinenglied 68 verbunden ist. Der Planetenträger 84' ist drehfest mit einem Hohlwellenabschnitt verbunden, der koaxial um die Koppelwelle 54' angeordnet und verdrehbar hierzu gelagert ist.

Der Hohlwellenabschnitt ist über einen ersten Koppelradsatz 56a"' und über einen zweiten Koppelradsatz 56b"' mit der Getriebeausgangswelle 34a verbunden.

Genauer gesagt sind an dem Hohlwellenabschnitt um die Koppelwelle 54' herum zwei Festräder 58a"', 58b"' festgelegt. Das eine Festrad ist dem ersten Koppelradsatz 56a"' zugeordnet und steht in Eingriff mit einem Losrad 58a"' an der Getriebeausgangswelle 34a, wobei der erste Koppelradsatz 56a"' der Vorwärtsgangstufe 1 zugeordnet ist.

In entsprechender Weise steht das andere Festrad 58b"' des Hohlwellenabschnittes mit einem Losrad 56b"' für die Vorwärtsgangstufe 3 in Eingriff, das an der Getriebeausgangswelle 34a drehbar gelagert ist.

Zwischen den Losrädern 56a"', 56b"' für die Vorwärtsgangstufen 1 und 3 ist ein Schaltkupplungspaket K2"' angeordnet, das zwei Schaltkupplungen aufweist, um alternativ den ersten Koppelradsatz 56a"' mit dem zweiten Koppelradsatz 56b"' in den Leistungsfluss zu bringen.

Bei den Fig. 4 und 5 kann die Koppel-Schaltkupplungsanordnung K4 ähnlich aufgebaut sein wie bei der Fig. 1, kann jedoch auch nur zwei Schaltstellungen beinhalten, wie bei der Ausführungsform der Fig. 3.

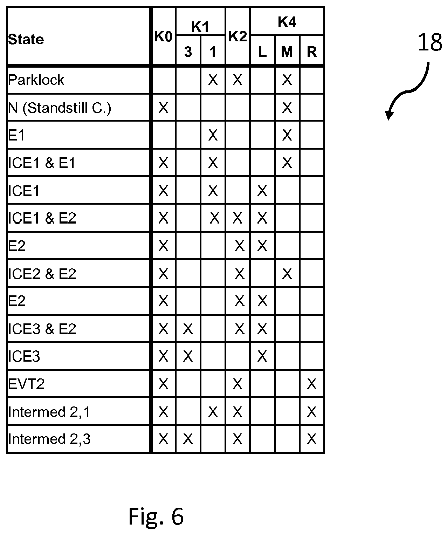

In Fig. 6 ist eine Schalttabelle für die Getriebeanordnung 18 der Fig. 1 und 2 dargestellt.

Die Schalttabelle für die Getriebeanordnung 18 zeigt in verschiedenen Zeilen unterschiedliche Zustände an. In zugehörigen Spalten ist jeweils der Öffnungs- oder Schließzustand der Kupplungen K0, K1(3), K1(1), K2, K4(L), K4(M) und K4(R) dargestellt. Ein "X" bedeutet, dass die jeweilige Schaltkupplung geschlossen ist. Wenn die Schalttabelle keinen Eintrag zeigt, ist die zugehörige Schaltkupplung entweder geöffnet oder in manchen Fällen kann es auch egal sein, ob sie geöffnet ist oder nicht, was sich aus dem jeweiligen Gesamtzusammenhang heraus ergibt.

Ein erster Zustand ("state") ist ein Parksperrenzustand ("park lock"). Hierbei ist die Schaltkupplung K1(1) geschlossen. Die Schaltkupplung K2 ist geschlossen und die Koppel-Schaltkupplungsanordnung K4 befindet sich in der Schaltstellung K4(M).

Hierdurch wird die Getriebeanordnung 18 insgesamt durch das Einrichten von zwei unterschiedlichen Übersetzungsverhältnissen der Vorwärtsgangstufen 1 und 2 blockiert, um auf diese Weise den Parksperrenzustand einzurichten.

Die Antriebskupplung K0 kann dabei geöffnet sein, kann jedoch auch geschlossen sein.

In der Schalttabelle der Fig. 6 ist ferner ein Zustand "N" gezeigt, bei dem es sich um einen Neutralzustand handelt. Hierbei ist die Antriebskupplung K0 geschlossen, und die Koppel-Schaltkupplungsanordnung befindet sich in der Schaltstellung K4(M).

Folglich wird Antriebsleistung des Verbrennungsmotors 12 ggf. über die Antriebskupplung K0 auf die Getriebeeingangswelle 26 übertragen, und über der Koppel-Schaltkupplungsanordnung K4 auf den Überlagerungsradsatz 64. Die elektrische Maschine 16 befindet sich vorzugsweise in einem Leerlaufzustand oder Generatorzustand und dreht sich ggf. mit, da die Blockierkupplung BL geschlossen ist, und die Brückenkupplung BR ebenfalls.

Da weder die Kupplung K1 noch die Kupplung K2 geschlossen ist, wird Antriebsleistung jedoch nicht auf die Getriebeausgangswelle 34 übertragen. Der Zustand kann folglich zum Standladen verwendet werden.

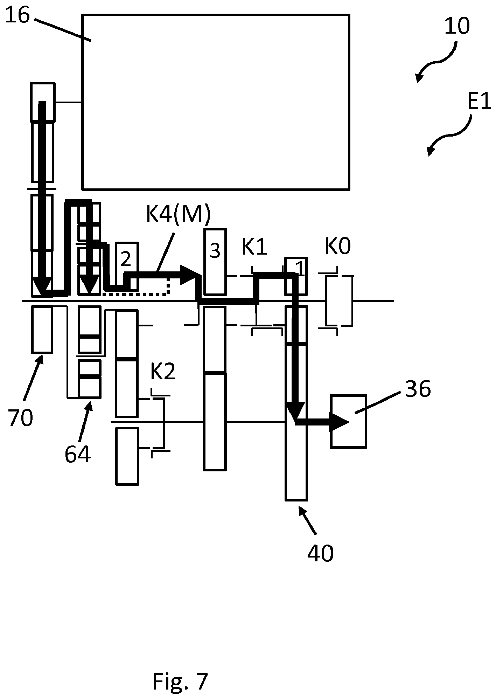

Ein weiterer Zustand der Schalttabelle der Fig. 6 ist ein Zustand E1, bei dem elektromotorischer Fahrbetrieb in der Vorwärtsgangstufe 1 eingerichtet wird. Hierbei sind, wie es auch in Fig. 7 gezeigt ist, die Kupplungen K1(1) und K4(M) geschlossen.

Hieraus ergibt sich aufgrund geschlossener Blockierkupplung BL des Überlagerungsradsatzes 64 ein Leistungsfluss von der elektrischen Maschine 16 über den Maschinenradsatz 70, den Überlagerungsradsatz 64 und die Getriebeeingangswelle 26 hin zu dem ersten Gangradsatz 40, der aufgrund der geschlossenen Schaltkupplung K1(1) die Antriebsleistung auf das Antriebszahnrad 36 überträgt.

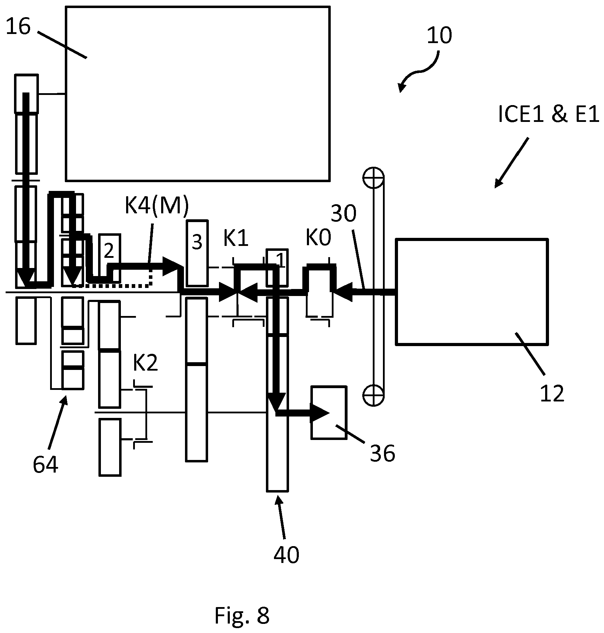

Fig. 8 zeigt einen Zustand ICE1&E1, bei dem die Antriebsleistung der elektrischen Maschine 16 genau so über den ersten Gangradsatz 40 geführt wird. Ferner ist jedoch auch die Antriebskupplung K0 im Gegensatz zum Zustand der Fig. 7 geschlossen, so dass auch der Verbrennungsmotor 12 (ICE, internal combustion engine) Antriebsleistung auf den ersten Gangradsatz 40 übertragen kann.

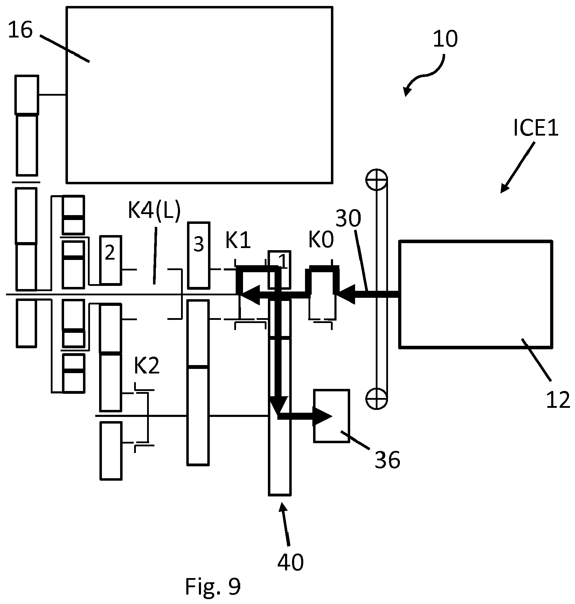

Fig. 9 zeigt einen Zustand ICE1, bei dem ausschließlich der Verbrennungsmotor 12 Antriebsleistung bereitstellt, und zwar über den ersten Gangradsatz 40.

Hierbei ist die Koppel-Schaltkupplungsanordnung K4 vorzugsweise in der Schaltstellung K4(L), so dass die Brückenkupplung BR geöffnet ist und folglich keine Antriebsleistung des Verbrennungsmotors 12 auf die Koppelwelle 54 übertragen wird. Folglich können Schleppverluste vermieden werden.

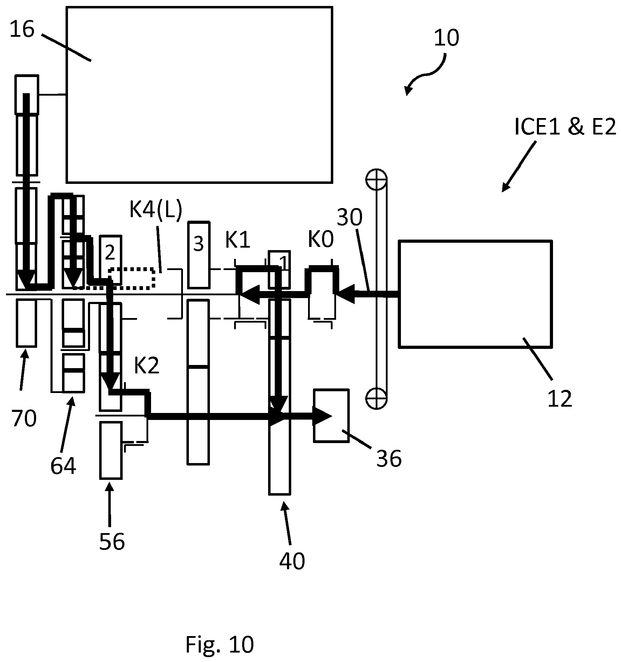

Fig. 10 zeigt einen Zustand ICE1&E2, bei dem der Verbrennungsmotor 12 nach wie vor Antriebsleistung über den ersten Gangradsatz 40 hin zu der Getriebeausgangswelle 34 überträgt.

Die elektrische Maschine 16 erzeugt ebenfalls Antriebsleistung, die aufgrund der geschlossenen Blockierkupplung (K4(L)) in den Koppelradsatz 56 eingeleitet wird. In dem Zustand ICE2&E2 ist die Kupplung K2 geschlossen, so dass die Antriebsleistung der elektrischen Maschine 16 auf die Getriebeausgangswelle 34 und folglich zu dem Abtriebszahnrad 36 übertragen wird.

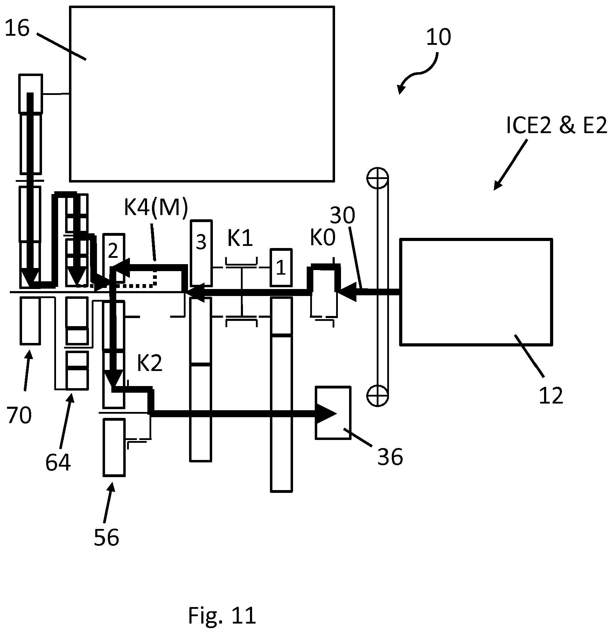

Fig. 11 zeigt einen Zustand ICE2&E2, bei dem die Kupplung K1(1) wieder geöffnet ist. Stattdessen wird die Koppel-Schaltkupplungsanordnung K4 in die mittlere Position K4(M) versetzt, so dass die Antriebsleistung des Verbrennungsmotors 12 nunmehr ebenfalls in die Koppelwelle 54 eingeleitet wird, so dass sich die Antriebsleistungen des Verbrennungsmotors 12 und der elektrischen Maschine 16 in dem Koppelradsatz 56 addieren und bei geschlossener Kupplung K2 auf die Getriebeausgangswelle geführt werden.

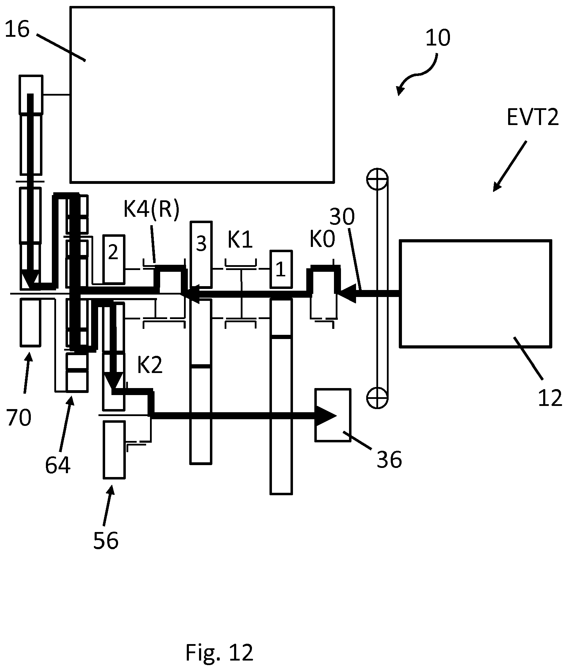

In Fig. 12 ist ein Zustand EVT2 gezeigt, bei dem beispielsweise ein Anfahrvorgang gemäß dem erfindungsgemäßen Verfahren über die Vorwärtsgangstufe 2 erfolgen kann.

Die Koppel-Schaltkupplungsanordnung K4 befindet sich in der Schaltstellung K4 (R), wobei die Brückenkupplung BR geschlossen ist, die Blockierkupplung BL jedoch geöffnet ist. Dies führt dazu, dass Antriebsleistung des Verbrennungsmotors 12 in den Überlagerungsradsatz 64 eingeleitet wird. Wenn die elektrische Maschine 16 sich in einem Leerlaufzustand befindet, kann sich die Drehung des Sonnenrades 82 jedoch in dem Überlagerungsradsatz 64 nicht abstützen, so dass sich das erste Eingangsglied 66 mitdreht, die elektrische Maschine 16 also kraftlos mitgeschleppt wird.

Sobald jedoch die elektrische Maschine 16 ein Antriebsmoment erzeugt, wird ein Anfahrvorgang eingeleitet, so dass sich der Planetenträger 84 in Drehung versetzt und aufgrund der geschlossenen Schaltkupplung K2 in eine Anfahrdrehzahl der Getriebeausgangswelle 34 umsetzt.

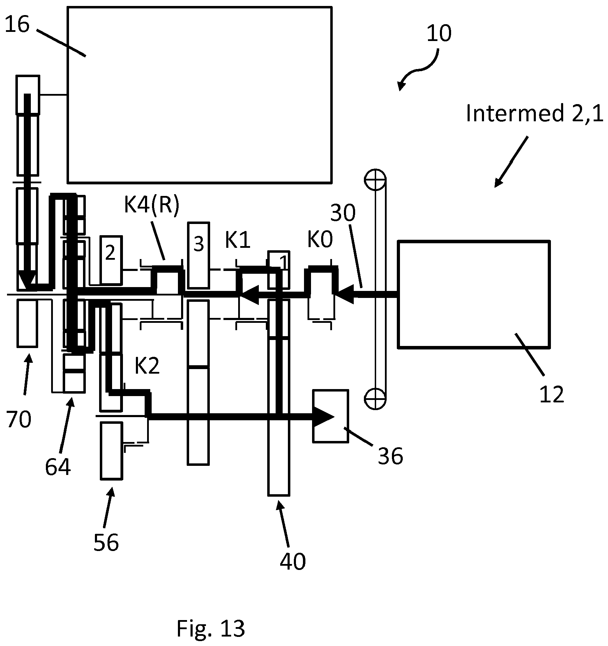

Fig. 13 zeigt einen weiteren Zustand "Intermed 2,1", bei dem sich die Koppel-Schaltkupplungsanordnung wiederum in der Stellung K4(R) befindet, die Blockierkupplung BL also geöffnet ist.

Im Unterschied zu dem Zustand EVT2 der Fig. 12 ist hierbei auch die Schaltkupplung K1(1) geschlossen, so dass ein verteilter Leistungsfluss erfolgt, zum einen über den Koppelradsatz 56 und zum anderen über den ersten Gangradsatz 40 hin zu der Getriebeausgangswelle 34 und dem damit verbundenen Abtriebszahnrad 36.

Um einen Zustand "Intermed 2,3" einzurichten, wird die Kupplung K1(1) geöffnet, und die Schaltkupplung K1(3) wird geschlossen.

Die übrigen Zustände der Schalttabelle der Fig. 6 ergeben sich in gleicher Weise.

Mit der Getriebeanordnung 18 der Fig. 1 können folglich zwei rein verbrennungsmotorische Gangstufen 1 und 3 eingerichtet werden (ICE1, ICE3).

Ferner können drei rein elektromotorische Gangstufen eingerichtet werden (E1, E2 und in Fig. 6 nicht dargestellt E3, wobei ausgehend von der Zeile E1 anstelle der Schaltkupplung K1(1) die Schaltkupplung K1(3) geschlossen ist).

Ferner können die Ausgangsleistungen der zwei Antriebsmaschinen 12, 16 aufsummiert werden, und zwar auf unterschiedliche Art und Weise, wie es bei ICE1&E1, ICE1&E2, ICE2&E2, ICE3&E2 angegeben ist.

Sämtliche Gangwechsel sind dabei so möglich, dass ein fehlendes Traktionsmoment über die jeweils andere Antriebsmaschine ausgeglichen werden kann.

Ferner sind Gangstufen nach der Art eines elektrisch variablen Betriebes einrichtbar (EVT2, Intermed 2,1, Intermed 2,3).

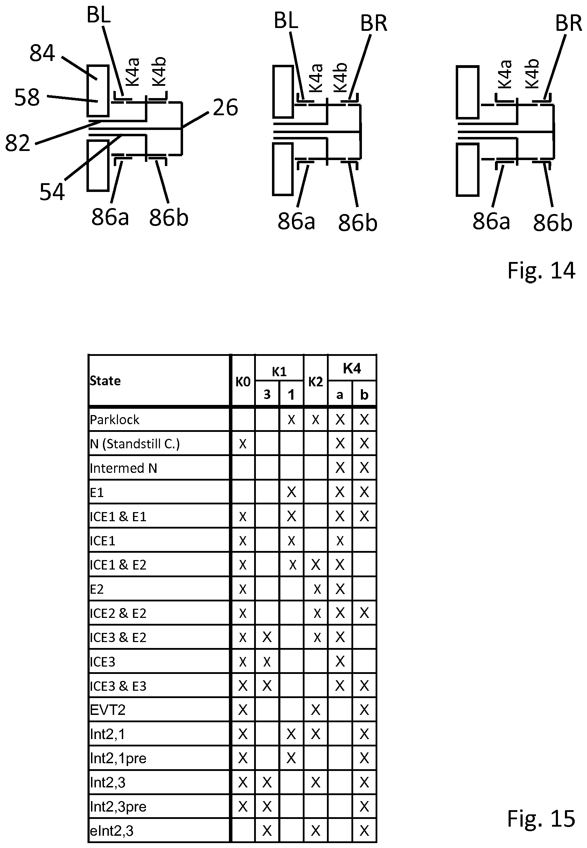

In Fig. 14 ist eine weitere Ausführungsform einer Koppel-Schaltkupplungsanordnung gezeigt, die bei den oben genannten Getriebeanordnungen und Hybridantriebssträngen anstelle der Koppel-Schaltkupplungsanordnung K4 der Fig. 2 verwendbar ist.

Die in Fig. 14 gezeigte Koppel-Schaltkupplungsanordnung unterscheidet sich von jener der Fig. 2 dadurch, dass die Koppel-Schaltkupplungsanordnung für die Blockierkupplung BL eine einzelne Schaltkupplung K4a und für die Brückenkupplung BR eine einzelne Schaltkupplung K4b beinhaltet. Jeder der zwei Schaltkupplungen K4a, K4b ist jeweils ein einzelnes Betätigungsglied 86a bzw. 86b zugeordnet. Folglich können die Blockierkupplung BL und die Brückenkupplung BR unabhängig voneinander betätigt werden.

In Fig. 14 ist links ein Zustand gezeigt, bei dem die Blockierkupplung BL geschlossen ist, wohingegen die Brückenkupplung BR geöffnet ist. In der mittleren Darstellung der Fig. 14 ist ein Zustand gezeigt, bei dem sowohl die Blockierkupplung BL als auch die Brückenkupplung BR geschlossen sind. Auf der rechten Seite in Fig. 14 ist ein Zustand gezeigt, bei dem nur die Brückenkupplung BR geschlossen ist, die Blockierkupplung BL jedoch geöffnet ist.

Mit der in Fig. 14 gezeigten Koppel-Schaltkupplungsanordnung lassen sich die gleichen Betriebsmodi und Leistungsflüsse realisieren wie bei der Ausführungsform der Fig. 1, die in Bezug auf die Figuren 6 bis 13 näher beschrieben sind.

Die Schaltstellung K4 (L) entspricht dabei einer geschlossenen Blockierkupplung K4a. Die Schaltstellung K4(R) entspricht einer geschlossenen Brückenkupplung K4b. Die mittlere Schaltstellung K4(M der Koppel-Schaltkupplungsanordnung der Figuren 1, 2 und 6 entspricht dabei geschlossenen Zuständen sowohl der Blockierkupplung K4a als auch der Brückenkupplung K4b.

Mit einer Getriebeanordnung, die die Koppel-Schaltkupplungsanordnung der Fig. 14 anstelle der Koppel-Schaltkupplungsanordnung K4 der Fig. 2 aufweist, lassen sich folglich Betriebszustände einrichten, wie es in Fig. 15 gezeigt ist. Es ist zu erkennen, dass die gleichen Betriebszustände einrichtbar sind wie bei der Ausführungsform, die in Fig. 6 beschrieben ist.

Zudem sind einige der Betriebszustände der Fig. 15 auch bei der Ausführungsform der Fig. 6 einrichtbar.

## Patentansprüche

1. Getriebeanordnung (18) für einen Hybridantriebsstrang (10), mit:
- einer Getriebeeingangswelle (26), die mit einer ersten Antriebsmaschine (12) verbindbar ist,
- wenigstens einer Getriebeausgangswelle (34),
- wenigstens einem mittels einer Gangschaltkupplung schaltbaren Gangradsatz (40, 46), der die Getriebeeingangswelle (26) und die Getriebeausgangswelle (34) verbindet, um eine Gangstufe (1, 3) einzurichten,
- einem Überlagerungsradsatz (64), der ein erstes Eingangsglied (66), ein zweites Eingangsglied (82) und ein Ausgangsglied (84) aufweist, und
- einem Maschinenglied (68), das mit einer zweiten Antriebsmaschine (16) verbindbar ist,
- wobei das Maschinenglied (68) mit einem Glied (66) des Überlagerungsradsatzes (64) verbunden ist,
- wobei die Getriebeeingangswelle (26) über eine schaltbare Brückenkupplung (BR) mit einem weiteren Glied des Überlagerungsradsatzes (64) verbunden ist,
- wobei zwei Glieder (82, 84) des Überlagerungsradsatzes (64) mittels einer Blockierkupplung (BL) miteinander verbindbar sind,
**dadurch gekennzeichnet, dass**
die Brückenkupplung (BR) und die Blockierkupplung (BL) in eine Koppel-Schaltkupplungsanordnung (K4; K4a, K4b) integriert sind.

2. Getriebeanordnung nach Anspruch 1, wobei die Koppel-Schaltkupplungsanordnung (K4a, K4b) zwei Betätigungsglieder (86a, 86b) aufweist, um die Blockierkupplung (BL) und die Brückenkupplung (BR) unabhängig voneinander betätigen zu können.

3. Getriebeanordnung nach Anspruch 1, wobei die Koppel-Schaltkupplungsanordnung (K4) ein einzelnes Betätigungsglied (86) zum Betätigen der Brückenkupplung (BR) und der Blockierkupplung (BL) aufweist, wobei die Koppel-Schaltkupplungsanordnung (K4) eine erste Schaltstellung (K4(L)), in der die Blockierkupplung (BL) geschlossen ist, und eine zweite Schaltstellung (K4(R)) aufweist, in der die Brückenkupplung (BR) geschlossen ist, wobei die Koppel-Schaltkupplungsanordnung (K4) vorzugsweise eine dritte Schaltstellung (K4(M)) aufweist, in der die Blockierkupplung (BL) und die Brückenkupplung (BR) beide geschlossen sind.

4. Getriebeanordnung nach einem der Ansprüche 1 - 3, wobei das Ausgangsglied (84) des Überlagerungsradsatzes (64) über einen Koppelradsatz (56) mit der Getriebeausgangswelle (34) verbunden ist.

5. Getriebeanordnung nach einem der Ansprüche 1 - 4 oder nach dem Oberbegriff des Anspruchs 1, wobei das Ausgangsglied (84) des Überlagerungsradsatzes (64) über einen Koppelradsatz (56) mit der Getriebeausgangswelle (34) verbunden ist, und
- wobei der Koppelradsatz (56) ein erstes Losrad (58) aufweist, das an einer Koppelwelle (54) drehbar gelagert ist, die mit dem Ausgangsglied (84) des Überlagerungsradsatzes (64) fest verbunden ist, und/oder
- wobei der Koppelradsatz (56) ein zweites Losrad (60) aufweist, das an der Getriebeausgangswelle (34) drehbar gelagert ist.

6. Getriebeanordnung nach einem der Ansprüche 1 - 5, wobei in axialer Richtung zwischen dem Überlagerungsradsatz (64) und dem Koppel-Schaltkupplungspaket (K4) wenigstens ein Koppelradsatz (56) angeordnet ist.

7. Getriebeanordnung nach einem der Ansprüche 1 - 6, wobei das Maschinenglied (68) mit der zweiten Antriebsmaschine (16) auf einer axialen Seite des Überlagerungsradsatzes (64) verbindbar ist, die dem ersten Gangradsatz (40, 46) und/oder der Brückenkupplung (BR) und/oder der Blockierkupplung (BL) gegenüberliegt.

8. Getriebeanordnung nach einem der Ansprüche 1 - 7, wobei das Maschinenglied (68) mit einem Zahnrad (72) eines Maschinenradsatzes (70) verbunden ist, über den die zweite Antriebsmaschine (16) mit dem Maschinenglied (68) verbindbar ist.

9. Getriebeanordnung nach einem der Ansprüche 1 - 8, wobei die Getriebeeingangswelle (26) und die Getriebeausgangswelle (34) über genau zwei Gangradsätze (40, 46) miteinander verbunden sind, über die jeweils eine Direkt-Gangstufe (1, 3) für die erste Antriebsmaschine (12) einrichtbar sind.

10. Getriebeanordnung nach einem der Ansprüche 1 - 9, wobei die erste Antriebsmaschine (12) mit der Getriebeeingangswelle (26) über eine Antriebskupplung (K0) verbindbar ist.

11. Getriebeanordnung nach einem der Ansprüche 1 - 10, wobei das erste Eingangsglied ein Hohlrad des Überlagerungsradsatzes (64) ist und/oder wobei das zweite Eingangsglied ein Sonnenrad (82) des Überlagerungsradsatzes (64) ist und/oder wobei das Ausgangsglied ein Planetenträger (84) des Überlagerungsradsatzes (64) ist.

12. Getriebeanordnung nach einem der Ansprüche 1 - 11 oder nach dem Oberbegriff des Anspruchs 1, wobei das Maschinenglied (68) mit einem Hohlrad (66) des Überlagerungsradsatzes (64) verbunden ist und wobei ein Sonnenrad (82) des Überlagerungsradsatzes (64) über die Brückenkupplung (BR) mit der Getriebeeingangswelle (26) verbindbar ist.

13. Getriebeanordnung nach Anspruch 12, wobei ein Planetenträger (84) auf einer der Brückenkupplung (BR) zugewandten axialen Seite mit einem Koppelradsatz (56) verbunden ist, der den Planetenträger (84) mit der Getriebeausgangswelle (34) verbindet.

14. Verfahren zum Betreiben eines Hybridantriebsstranges (10), der eine Getriebeanordnung (18) nach einem der Ansprüche 1 - 13 aufweist, um ein mit dem Hybridantriebsstrang (10) ausgestattetes Fahrzeug aus dem Stillstand anzufahren, mit den Schritten:
- Öffnen der Blockierkupplung (BL) und Schließen der Brückenkupplung (BR);
- Übertragen von Antriebsleistung der ersten Antriebsmaschine (12) auf die Getriebeeingangswelle (26), derart, dass das mit dem Maschinenglied (68) verbundene Eingangsglied (66) entsprechend der Drehzahl des mit der Getriebeeingangswelle (26) verbundenen Gliedes (82) des Überlagerungsradsatzes (64) dreht, und dass das Ausgangsglied (84) stillsteht; und
- Erhöhen eines von der zweiten Antriebsmaschine (16) bereitgestellten Drehmomentes, so dass sich das Ausgangsglied (84) des Überlagerungsradsatzes (64) zu drehen beginnt und das Fahrzeug anfährt.

15. Verfahren zum Betreiben eines Hybridantriebsstranges (10), der eine Getriebeanordnung (18) nach einem der Ansprüche 1 - 13 aufweist, wobei ausgehend von einem Zustand, bei dem (i) Antriebsleistung sowohl von einer ersten Antriebsmaschine (12) als auch von einer zweiten Antriebsmaschine (16) bereit gestellt und auf die Getriebeausgangswelle (34) übertragen wird, bei dem (ii) die Blockierkupplung (BL) und/oder die Brückenkupplung (BR) geschlossen ist bzw. sind und bei dem (iii) Antriebsleistung der ersten Antriebsmaschine (12) oder Antriebsleistung der zweiten Antriebsmaschine (16) über die geschlossene Blockierkupplung (BL) und/oder über die geschlossene Brückenkupplung (BR) geführt wird, folgende Schritte vor einem Schaltvorgang an der Koppel-Schaltkupplungsanordnung (K4; K4a, K4b) durchgeführt werden:
Verringern eines von der einen Antriebsmaschine bereit gestellten Drehmomentes und entsprechendes Erhöhen eines von der anderen Antriebsmaschine bereit gestellten Drehmomentes, um ein über die geschlossene Blockierkupplung (BL) und/oder über die geschlossene Brückenkupplung (BR) übertragenes Drehmoment zu verringern.

16. Verfahren nach Anspruch 15, wobei der Schaltvorgang nach dem Verringern des über die geschlossene Blockierkupplung (BL) und/oder über die geschlossene Brückenkupplung (BR) übertragenen Drehmomentes durchgeführt wird, sobald das über die geschlossene Blockierkupplung (BL) und/oder über die geschlossene Brückenkupplung (BR) übertragene Drehmoment eine Schwellenwert unterschritten hat.

17. Verfahren nach Anspruch 15 oder 16, wobei der Schaltvorgang beinhaltet, eine Schaltkupplung der Koppel-Schaltkupplungsanordnung (K4; K4a, K4b) zu öffnen.

18. Verfahren nach einem der Ansprüche 15 bis 17, wobei, wenn das Drehmoment der ersten Antriebsmaschine verringert und das Drehmoment der anderen Antriebsmaschine erhöht wird, das Verhältnis aus Drehzahl der ersten Antriebsmaschine und Drehzahl der zweiten Antriebsmaschine konstant gehalten wird.
